# EUROPEAN PATENT APPLICATION

(11) **EP 4 492 235 A1**
(43) Date of publication of application: **15.01.2025**
(21) Application number: 23185306.0
(22) Date of filing: 13.07.2023
(51) Int. Cl.: G06F 9/50

(54) **METHOD FOR PROVIDING A COMMUNICATION AND COMPUTING SERVICE SESSION**

(71) Applicant: NTT DOCOMO, INC., Tokyo 100-6150 (JP)
(72) Inventor: ERKILIC CIVELEK, Tugce, 80687 Munich (DE); GUERZONI, Riccardo, 80687 Munich (DE); SAMA, Malla Reddy, 80687 Munich (DE); BAKHSHI, Bahador, 80687 Munich (DE); MUTIKAINEN, Jari, 80687 Munich (DE)
(74) Representative: Viering, Jentschura & Partner mbB Patent- und Rechtsanwälte

(57) **Abstract**

According to various embodiments, a method for providing a communication and computing service session is described, comprising receiving, by the one or more control plane functions, computational availability information including, communication availability information including information and selecting a service provision profile which specifies a distribution of tasks of the communication and computing service between a mobile terminal, one or more other computing devices and one or more devices of the mobile communication network depending on the computational availability information and the communication availability information.

## Description

The present disclosure relates to methods for providing a communication and computing service communication session.

Various services, like artificial intelligence based services, e.g. for augmented reality or control, require high computational effort. Therefore, it is desirable to distribute them over multiple devices, in particular for example on cloud devices which may provide high computational power. On the other hand, this requires computational resources, e.g. when results of such a service are needed by a mobile terminal and need to be communicated to the mobile terminal, possibly with a certain quality of service like latency. Processing only on a mobile terminal may however not be possible due to limited computational power on the mobile terminal as well as undesirable energy consumption.

Accordingly, efficient approaches for providing communication and computing services are desirable.

According to various embodiments, a method for providing a communication and computing service session (for a mobile terminal) is provided, comprising
- Receiving, by the one or more control plane functions of a mobile communication network connecting a mobile terminal with one or more other computing devices, computational availability information including information about what computational resources are available for provision of the communication and computing service session in the mobile terminal, the one or more other computing devices and one or more devices of the mobile communication network at least partially from a distributed computing management component;
- Receiving, by the one or more control plane functions, communication availability information including information about what communication resources are available for provision of the communication and computing service session in the mobile terminal and the one or more devices of the mobile communication network at least partially from one or more user plane components of the mobile communication network;
- Selecting, by the one or more control plane functions, a service provision profile which specifies a distribution of tasks of the communication and computing service between the mobile terminal, the one or more other computing devices and the one or more devices of the mobile communication network depending on the computational availability information and the communication availability information; and
- Requesting, by the one or more control plane functions, the distributed computing management component to provide computational resources of the mobile terminal, the one or more other computing devices and the one or more devices of the mobile communication network in accordance with the selected service provision profile for the provision of the communication and computing service session; and
- Requesting, by the one or more control plane functions, the one or more user plane components of the mobile communication network to provide communication resources of the mobile terminal and the one or more devices of the mobile communication network in accordance with the selected service provision profile for the provision of the communication and computing service session..

According to a further embodiment, a communication system (or one or more components thereof, in particular control plane components of the mobile communication network) configured to perform the method described above is provided.

Various examples corresponding to aspects of this disclosure are described below:
Example 1 is a method for providing a communication and computing service session as described above.
Example 2 is the method of example 1, comprising selecting the service provision profile and requesting the provision of computational resources and the provision of communication resource per communication and computing service session.
Example 3 is the method of example 1 or 2, comprising receiving, by the one or more control plane functions, a part of the computational availability information and/or of the communication availability information including information about what communication and/or computational resources are available for provision of the communication and computing service session in the mobile terminal with a communication and computing service session establishment request from the mobile terminal.
Example 4 is the method of example 3, wherein the communication and computing service session is a Protocol Data Unit session.
Example 5 is the method of any one of examples 1 to 4, comprising receiving, by the one or more control plane functions, a part of the availability information including information about what communication and computational resources are available for provision of the communication and computing service session in a radio access network of the mobile radio communication network from the radio access network.
Example 6 is the method of any one of examples 1 to 5, wherein the one or more control plane functions are one or more core network control plane functions of the mobile communication network.
Example 7 is the method of any one of examples 1 to 6, wherein the mobile communication network is a 6G mobile communication network.
Example 8 is the method of any one of examples 1 to 7, wherein the distributed computing management component manages distributed computing agents configured to execute tasks of the communication and computing service and implemented in the mobile terminal, the one or more other computing devices and/or the one or more devices of the mobile communication network.
Example 9 is the method of any one of examples 1 to 8, comprising selecting the service provision profile according to a service provision target including at least one of end-to-end latency of the communication and computing service session and energy efficiency of the provision of the communication and computing service session.
Example 10 is the method of any one of examples 1 to 9, comprising receiving, by the one or more control plane functions, multiple alternative service provision profiles and selecting the service provision profile from the multiple alternative service provision profiles, wherein each of the multiple alternative service provision profiles specifies a respective distribution of tasks of the communication and computing service between the mobile terminal, the one or more other computing devices and the one or more devices of the mobile communication network.
Example 11 is the method of example 10, comprising receiving the multiple alternative service provision profiles from an application layer component.
Example 12 is the method of any one of examples 1 to 11, comprising, receiving, by the one or more control plane functions of a mobile communication network connecting a mobile terminal with the one or more other computing devices, service requirement information about requirements of a communication and computing service session for the mobile terminal from an application service control function and selecting the service provision profile depending on the service requirement information.
Example 13 is the method of example 12, comprising receiving the service requirement information from an application layer component.
Example 14 is the method of any one of examples 1 to 13, wherein the one or more user plane components of the mobile communication network comprise a user plane function connecting the mobile terminal with the one or more other computing devices.
Example 15 is the method of example 13, wherein the one or more devices of the mobile communication network comprise one or more further computing devices in addition to the user plane function and wherein the user plane function connects the one or more further computing devices with the one or more other computing devices.
Example 16 is the method of any one of examples 1 to 15, wherein the one or more other computing devices are edge and/or cloud computing devices.
Example 17 is the method of any one of examples 1 to 16, wherein the one or more devices of the mobile communication network are devices providing core network functions and/or radio access network functions of the mobile communication network.
Example 18 is the method of example 1 to 16, wherein the one or more control plane functions comprise one or more of an Access and Mobility Management Function, a Session Management Function, a Distributed Computing Controller and a Policy Control Function.
Example 19 is the method of any one of examples 1 to 18, further comprising receiving, by the one or more control plane functions, an indication of an energy consumption target and selecting the service provision profiles depending on the energy consumption target.
Example 20 is the method of any one of examples 1 to 19, comprising receiving, by the one or more control plane functions, energy consumption information including information about an energy consumption profile of the mobile terminal, the one or more other computing devices and the one or more devices of a mobile communication network connecting the mobile terminal with the one or more other computing devices and selecting the service provision profiles depending on the energy consumption information.
Example 21 is a communication system configured to perform the method of any one of examples 1 to 20.

It should be noted that one or more of the features of any of the examples above may be combined with any one of the other examples. In particular, the Examples described in context of the device are analogously valid for the method.

According to further embodiments, a computer program and a computer readable medium comprising instructions, which, when executed by a computer, make the computer perform the method of any one of the above Examples are provided.

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:
- Figure 1: shows a radio communication system according to 5G.
- Figure 2: illustrates a communication system according to 6G.
- Figure 3: illustrates a link and computing profile.
- Figure 4: illustrates the selection of a multiple link and computing profile.

- Figure 5: illustrates the provision of a 3D video as example for the connection and computing service.
- Figures 6: to 9 show flow diagrams illustrating a procedure for providing a connection and computing service.
- Figure 10: illustrates the provision of multiple link and computing profiles of the application layer to the control plane.
- Figure 11: shows a flow diagram illustrating a method for providing a communication and computing service session according to an embodiment.

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

In the following, various examples will be described in more detail.

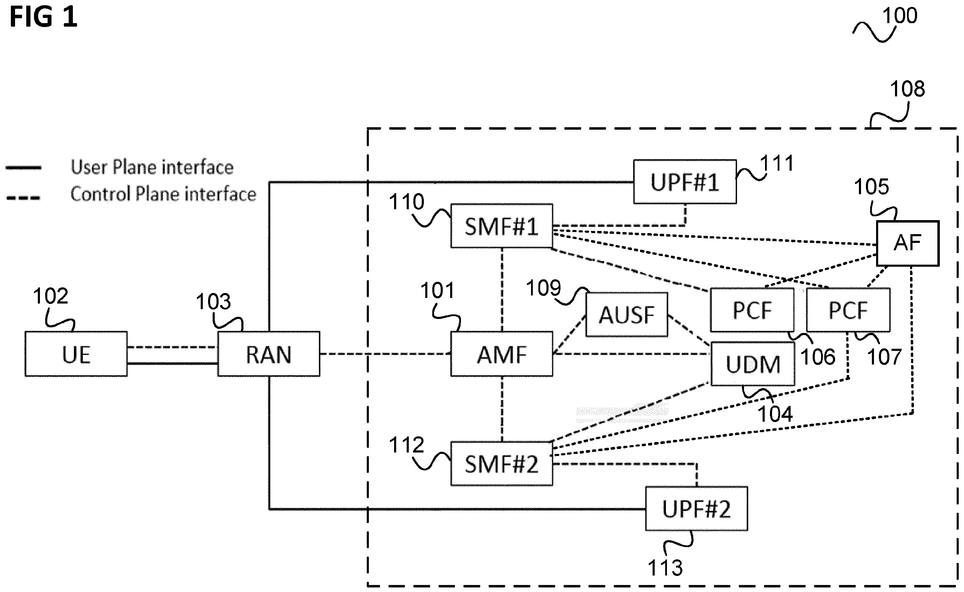

Figure 1 shows a radio (i.e. mobile) communication system 100 configured according to 5G (Fifth Generation).

The radio communication system 100 includes a mobile radio terminal device 102 such as a LTE (user equipment), a nano equipment (NE), and the like. The mobile radio terminal device 102, also referred to as subscriber terminal, forms the terminal side while the other components of the radio communication system 100 described in the following are part of the mobile radio communication network side, i.e. part of a mobile radio communication network (e.g. a Public Land Mobile Network PLMN), also referred to telecommunication network. The telecommunication network may form the connection between the mobile terminal 102 and other computing devices like edge or cloud devices (e.g. located in the Internet).

Furthermore, the radio communication system 100 includes a radio access network 103, which may include a plurality of radio access network nodes, i.e. base stations configured to provide radio access in accordance with a 5G (Fifth Generation) radio access technology (5G New Radio). It should be noted that the radio communication system 100 may also be configured in accordance with LTE (Long Term Evolution) or another mobile radio communication standard but 5G is herein used as an example. Each radio access network node 103 may provide a radio communication with the mobile radio terminal device 102 over an air interface. It should be noted that the radio access network 103 may include any number of radio access network nodes.

The radio communication system 100 further includes a core network (CN, here 5GC) 108 including an Access and Mobility Management Function (AMF) 101 connected to the RAN 103 and a Unified Data Management (UDM) 104. Here and in the following examples, the UDM may further consist of the actual LTE's subscription database, which is known as, for example, the UDR (Unified Data Repository). The core network 108 further includes an AUSF (Authentication Server Function) 109 and one or more PCFs (Policy Control Functions), in this example a first PCF 106 and a second PCF 107.

The core network 108 further includes multiple Session Management Functions (SMFs), in this example a first Session Management Function (SMF) 110 and a second Session Management Function (SMF) 112 and multiple User Plane Functions (UPFs), in this example a first User Plane Function (UPF) 111 a second User Plane Function (UPF) 113. The SMFs 110, 112 are for handling PDU (Protocol Data Unit) sessions, i.e. for creating, updating and removing PDU sessions and managing session context with the User Plane Function (UPF).

The core network 108 further includes an application function (AF) 105. The AF 105 is shown to be directly connected to the SMFs 110, 112 and PCFs 106, 107 but may also be connected to them via an NEF (Network Exposure Function), in particular in case the AF 105 is maintained by a third party (i.e. a party other than the operation of the mobile radio communication system 100.

The AF 105 enables an application to request the 5G system 100 to support specific QoS (Quality of Service) policies for a LTE 102 that establishes a PDU session to provide a communication service for that application. The core network 119 may include further components such as a Network Data Analytics Function (NWDAF) and a network repository function (NRF), not shown in figure 1. The NWDAF is responsible for providing network analysis and/or prediction information upon request from network functions. For example, a network function may request specific analysis information on the load level of a particular network slice instance. The NRF can be interrogated by any connected network function (e.g. AMF, SMF, PCF) to get information to discover another network function.

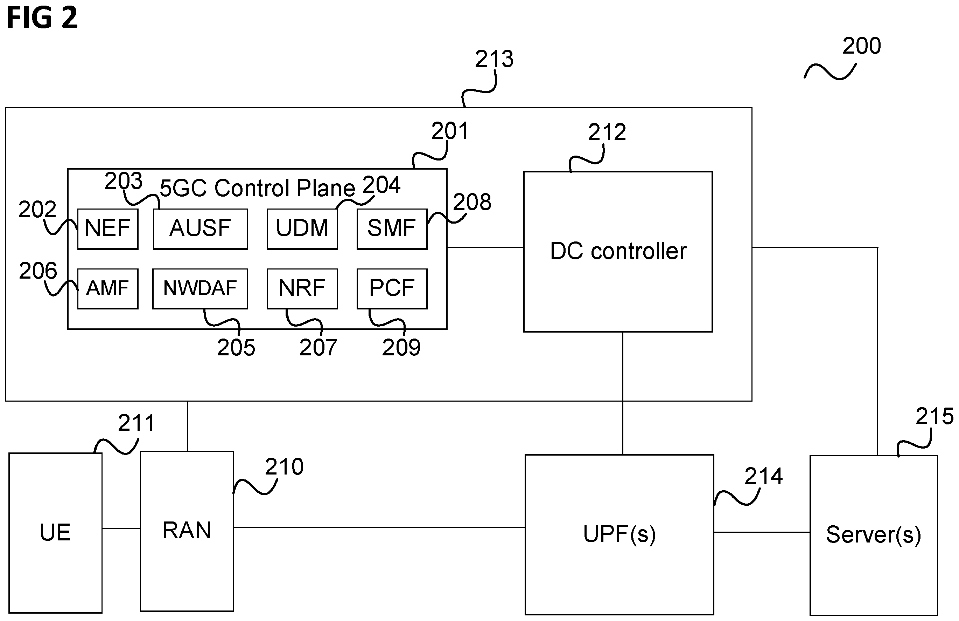

The 5G core network control plane can, together with a Distributed Computing (DC) platform, form the control plane of a 6G core network. This is illustrated in figure 2.

Figure 2 illustrates a communication system 200 according to 6G. The communication network 200 includes a 5GC control plane 201, including for example a NEF 202, an AUSF 203, a UDM 204, an NWDAF 205, an AMF 206, an NRF 207, an SMF 208 and a PCF 209.

The 5GC control plane 201 is coupled to a radio access network 210 to which a mobile terminal (LTE) 211 is connected. Together with a DC controller 212, the 5GC control plane 201 forms the control plane of the 6G core network 213. One or more UPFs 214 may route the 5G User Plane traffic between the RAN 210 and one or more server computers 215 implementing service processing functions for providing a service, e.g. processing layers of a neural network.

The DC controller 212 for example federates user-side and service-side (e.g. of cloud application) compute resources.

The DC controller 212 controls DC resources instantiated in the LTE 211, the 5G User Plane components (RAN 210 and UPF 214), and the application server(s) 215 The DC resources may include accelerators (e.g., GPU, FPGA).

An application may also involve computational tasks, like for example for artificial intelligence (i.e. machine learning). Examples include applications for robot control and augmented reality (for a mobile terminal). This may require computation-intensive tasks (and thus also tasks with high energy consumption). The tasks for such an application may be distributed to multiple components of the communication system 100 (including offloading computation-intensive tasks requiring high energy consumption to network endpoints), such as the LTE 102 itself and one or more cloud devices connected to the mobile communication network 103, 108 (and thus to the mobile terminal 102) via a UPF 111, 113.

Thus, providing the application includes performing computational tasks as well as providing a communication service (i.e. providing connectivity) for enabling communication between the components performing these computational tasks. The service provided by the communication system is therefore herein referred to as a communication and computing service (since it includes computational as well as communication tasks).

According to various embodiment, the application which requires the communication and computing service, i.e. the application layer, may indicate (service) requirements regarding the communication and computing service, such as latency or response time (e.g. in a real-time application, specifying the time within which a result needs to be provided), a reliability (i.e. a limit of the risk that the service fails) or redundancy level, an accuracy or error rate (e.g. of errors caused by communication errors) etc. These service requirements may for example be provided by a mobile terminal (using the application) or an AF for example.

The control plane of the communication system 100 selects, according to the service requirements, a certain (communication) link and computing profile (also denoted as service provision profile) for the communication and computing service. The link and computing profile may be selected from a set of link and computing profiles, wherein each link and computing profile corresponds to respective option for splitting the tasks for the communication and computing service. The application layer may also directly request one of the link and computing profiles.

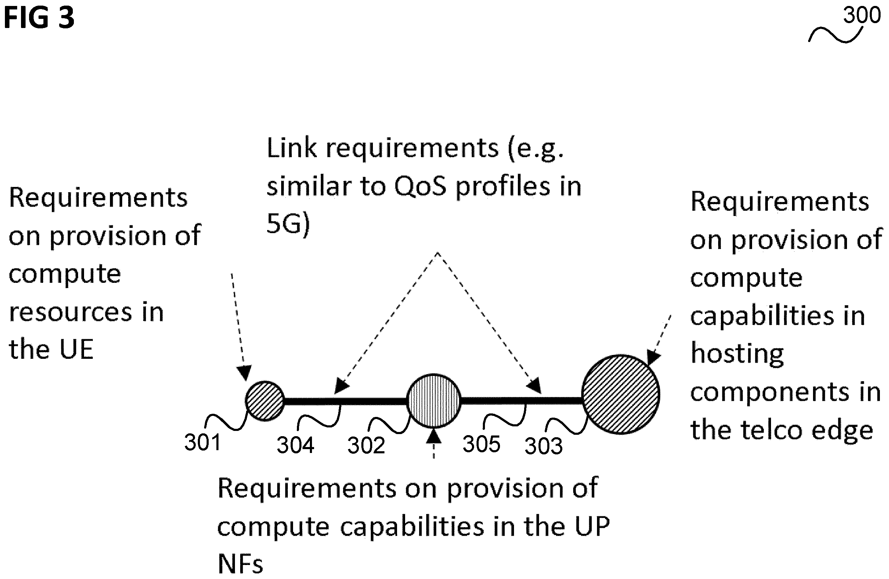

Figure 3 illustrates a link and computing profile 300.

In the present example, it is assumed that a LTE (generally a mobile terminal) 301, user plane network functions of the communication network 302 (to which the mobile terminal 301 is connected) and one or more hosting components 302 in the telecommunication edge (also referred to as one or more other computing devices (besides the mobile terminal) external to the communication network) should perform computational tasks for a communication and computing service.

Accordingly, the link and computing profile 300 defines (service provision) requirements regarding computational resources of the LTE 301 for the communication and computing service, requirements for the user plane network functions of the communication network 302 and requirements regarding computational resources of the one or more hosting devices 303 in the telecommunication edge for the communication and computing service, i.e. specifies what tasks are performed on the LTE 301, the user plane functions of the communication network 302 (i.e. the in-network components) and the one or more hosting devices 303 in the telecommunication edge, i.e. a distribution of tasks for providing the respective service. Further, the link and computing profile 300 may define a required quality of the link 304 (e.g. a QoS) between the LTE 301 and the user plane network functions 302 and the link 305 between the user plane network functions 302 and the telecommunication edge 304.

The one or more hosting devices 303 may for example include one or more cloud devices which are connected via a UPF to the LTE. Accordingly, the requirements regarding computational resources of the one or more hosting devices 303 can also be seen as requirements regarding computational resources that the UPF should provide (using the one or more hosting devices 303 in the telecommunication edge, e.g. edge and/or cloud devices).

According to various embodiments, in other words, tasks with regard to a communication and computing service are distributed over components including in-network components, i.e. network functions of the communication network, i.e. in particular using in-network computing. For example, in-network computing employs programmable network elements to compute on the path and prior to traffic reaching the edge or cloud servers (or the mobile terminal). So, data processing may be distributed to include processing data at the edge of the (telecommunication) network (or external to the network), in the network (in-network computing) and at the end-user side, e.g. closer to where it is generated. For example, computation-intensive, energy-consuming parts of a service may be offloaded to network endpoints and in-network computation capabilities may be used to decrease latency of the service, for instance by using hardware accelerators embedded in the network devices. This approach can help reduce latency and bandwidth usage by processing data locally instead of sending it to a centralized data centre and can be used in various computationally intensive applications such as:
- XR (Extended Reality) use cases: entertainment and gaming applications, advanced visualization methods, smart homes, affective computing, autonomous cars, and robotics.
- Computationally intensive AI (artificial intelligence) applications: image recognition tasks, video processing, 3D video streaming, computer vision, which use machine learning (ML) and neural networks.
- Web 3.0 (for a decentralized Internet): in-network computing can help reduce latency and bandwidth usage by processing data locally instead of sending it to a centralized data centre.

As will be described in more detail further below, the application layer may request alternative link and computing profiles corresponding to different operation splitting options (i.e. different task distribution options). The communication network control plane may then for example select the profile based on constraints on the communication and compute resources of the mobile terminal 301, UP NFs 302 and hosting components in the telecommunication edge 303 (e.g. based on what these components can provide, i.e. what resources they have available). Compute resources are for example capabilities such as support of DNN (deep neural network) layers or various accelerators, e.g., GPUs (graphic processing unit), ASICs (application-specific integrated circuits), and FPGAs (field programmable gate arrays) to better handle DNN computation (with logic).

The selection may for example be done with the target of optimizing service performance and energy efficiency of the service provision.

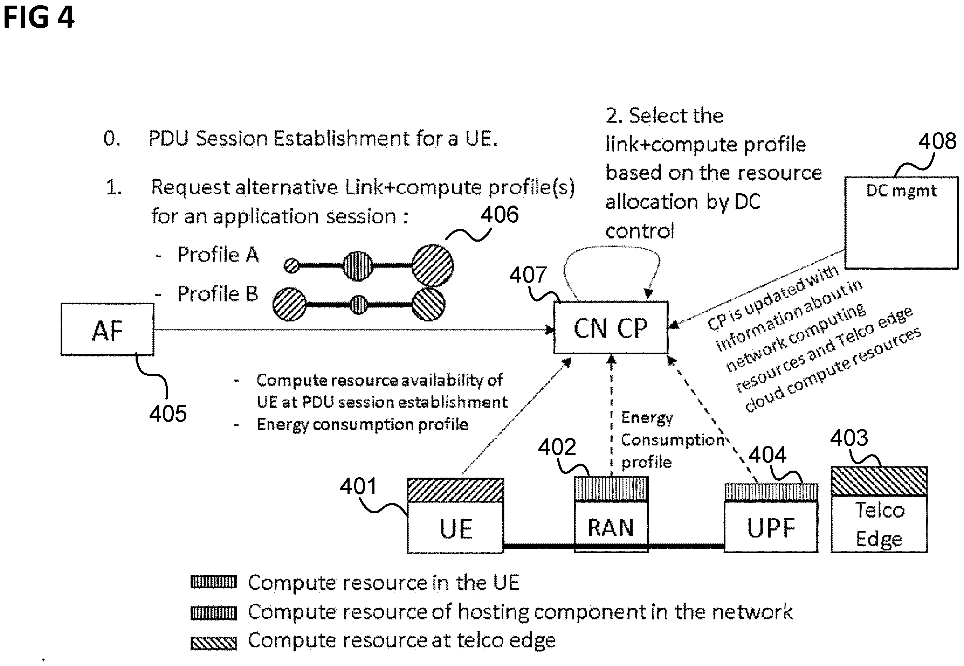

Figure 4 illustrates the selection of a multiple link and computing profile.

For example, for a LTE 401 that (or its user) wants to use a certain (communication and computing) service, a PDU session is first established.

To perform a service session involving separate application tasks (i.e. tasks for providing the service) performed in the LTE 401, in the network 402, 404 (i.e. by in-network computing), e.g. including RAN and core network, and the telecommunication edge 403 (connected by a UPF 404), the application layer (e.g. an application function 405 which has received the request for the service) issues alternative link and computing profiles 406 to the (mobile) communication network's (core network) control plane 407 (i.e. one or more CP components), i.e. requests that the control plane 407 selects (and thus realizes) one of the link and computing profiles 406. The alternative link and computing profiles 406 can be seen as indications of combined link and computing (service provision) requirements issued by the application layer (and may correspond to the service requirements because the application layer has determined them to fulfil the service requirements).

The network control plane (CP) 407 selects a link and computing profile from the issued link and computing profiles 406 based on availability of resources, e.g. based on knowledge of connectivity resources indicated by user plane NFs 402, 404 and compute resources which it gets (at least partially) from a DC (Distributed Computing) management entity (or component) 408. For example, the control plane 407 retrieves information about compute resource availability of in-network elements and the telecommunication edge are retrieved from the DC management component 408. The DC management component 408 may or may not be part of the control plane 407 of the telecommunication network.

The mobile terminal 401 may provide information about its available compute resources at PDU session establishment.

The selection of the link and computing profiles 406 by the control plane 407 may be based on combined targets of service performance and energy efficiency. So, balance between service performance and energy efficiency may be achieved by the control plane 407. For this, the various components that may be involved in the provision of the service (mobile terminal 401 or components thereof, in-network components 402, 404, telecommunication edge components 403) may provide information about their energy consumption profile (wherein for the telecommunication edge components 403 this information may be provided by the UPF 404). An energy consumption profile of a device or component is an indicator of the energy efficiency of the compute component in the UE, the network or edge. It may for example specify its energy consumption for a certain computational load, i.e. a mapping (or relation) between from utilization of computational resources to energy consumption. The alternative link and computing profiles 406 may for example not include the energy consumption profiles.

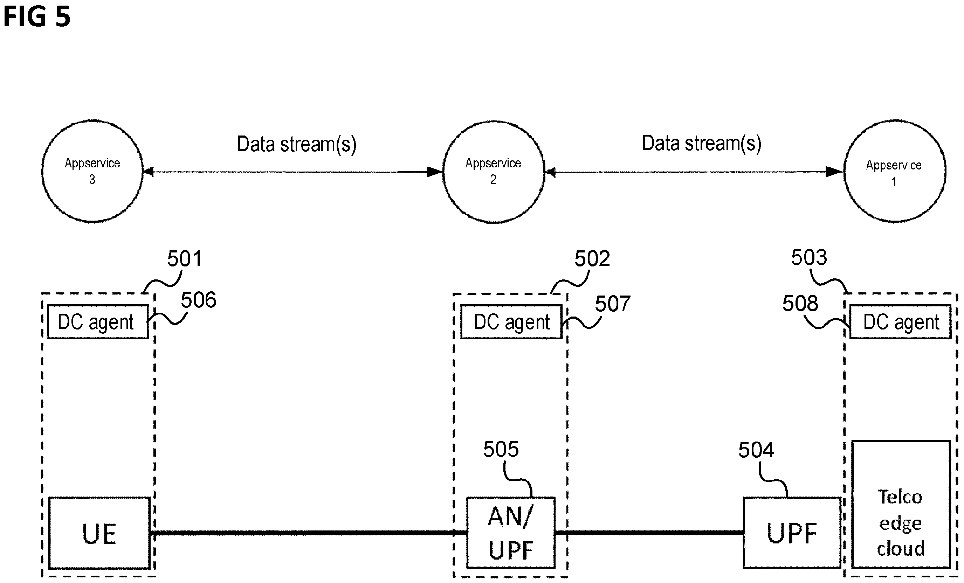

Figure 5 illustrates an example for the connectivity and computing service.

As in the examples described above, a mobile terminal 501, in-network components 502 and telecommunication edge components 503 are involved in the provision of the service (i.e. providing connection and computing for the service), i.e. by mobile terminal (LTE) resources, in-network resources and telecommunication edge resources. The telecommunication edge components 503 are for example connected to the mobile terminal 501 and the in-network components 502 via a UPF 504 and the in-network components 502 are for example connected to the mobile terminal 501 and the telecommunication edge components 503 via an access network and/or UPF 505.

For the application service provisioning, the telecommunication edge components 503 provide a application service 1; data stream(s) are transferred to and/or from the in-network components 502; the in-network components 502 perform an application service 2 based on data stream(s) transferred from and/or to the mobile terminal 501; the mobile terminal 501 runs an application service 3. Applications service 1, 2 and 3 may be processing layers of a Neural Network model, which is split among the mobile terminal 501, network devices 502 and telecommunication edge components 503 and executed in DC agents 506 507 508.

Different link and computing profiles may correspond to different variations of this distribution. For example, application service 2 tasks may be shifted from in-network components 502 to the mobile terminal 501 or to the telecommunication edge components 503 (resulting in different resource requirements regarding transmission bandwidth, i.e. connection resources).

To execute the distributed application services, a distributed computing (DC) layer is formed by Distributed Computing agents 506, 507, 508 provided as part of (i.e. by one or more components of) the mobile terminal 501, the in-network components 502 and the telecommunication edge components 503.

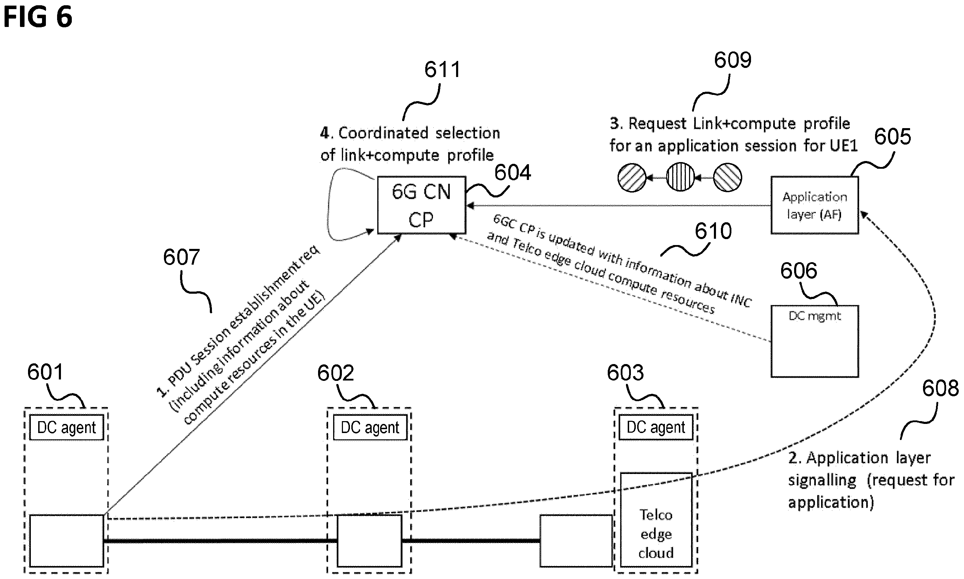

A procedure for providing a connection and computing service, e.g. the application service of Figure 5, including selection of a link and computing profile, is described in the following in detail with reference to figures 6, 7, 8 and 9.

Figures 6 to 9 show flow diagrams illustrating a procedure for providing a connection and computing service.

As described with reference to figure 5, a mobile terminal 601, 701, 801, 901, in-network components 602, 702, 802, 902 and telecommunication edge components 603, 703, 803, 903 are involved in the flow.

Further, a 6G core network control plane 604, 704, 804, 904 (i.e. one or more components implementing a 6G CN CP, e.g. 5GC control plane 201 components and a DC controller 212, see figure 2), an application layer component (e.g. an AF) 605, 705, 805, 905 and a (central) DC management component 606, 706, 806, 906 (e.g. corresponding to DC management component 408) are involved in the flow. The DC management component 606, 706, 806, 906 for example corresponds to resource management of the DC controller 212.

In 607, the mobile terminal 601 sends a PDU establishment request to the 6G core network control plane 604. This request includes information about the computing resources available for the service in the mobile terminal 601.

Further, in 608, via application signalling (using the established PDU session), the application layer component 605 is informed about the requested service (e.g. the mobile terminal 601 sends a request for the service to the network which is received by an AF).

In 609, the application layer component 605 requests a link and computing profile for the service (i.e. an application session for the mobile terminal 601) from the control plane 604, i.e. requests provision of resources according to a link and computing profile from the control plane 604. Further, in 610, the control plane 604 is informed about resources available for the service in the in-network components 602 and the telecommunication edge components 603, in this example by the DC management component 606.

In 611, the control plane 604 performs coordinated link and compute selection, i.e. selects a link and computing profile for the service based on
- Network conditions (like in 5GS)
- DC resource availability:
   - In the mobile terminal 601 (information about availability provided by the LTE at PDU session establishment request)
   - In in-network components 602 and telecommunication edge (e.g. cloud) components (information about availability retrieved from the DC control layer, e.g. DC management component 606)

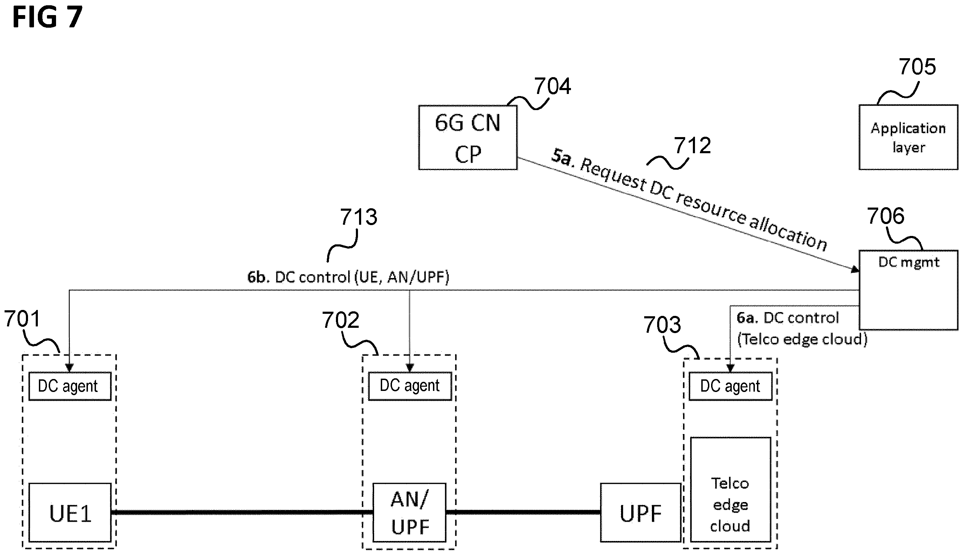

Continuing with figure 7, in 712, the control plane 704 requests the DC management component 706 to allocate resources for the service according to the selected link and computing profile. The DC management component 706 informs the (local) distributed computing agents of the mobile terminal 701, the in-network components 702 and the telecommunication edge components 702 accordingly to allocate the respective resources.

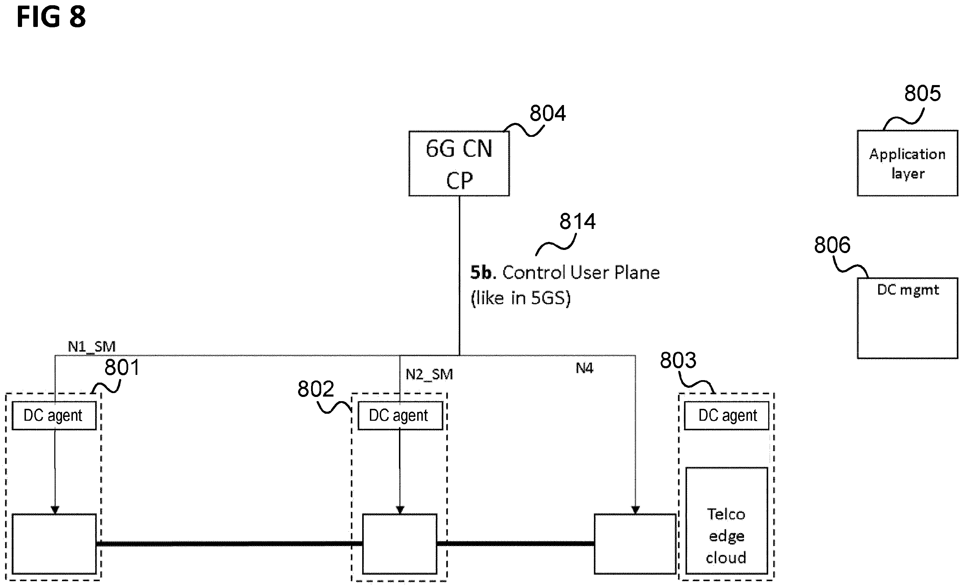

Continuing with figure 8, in 814, the control plane 804 performs user plane control (e.g. like in a 5G communication system).

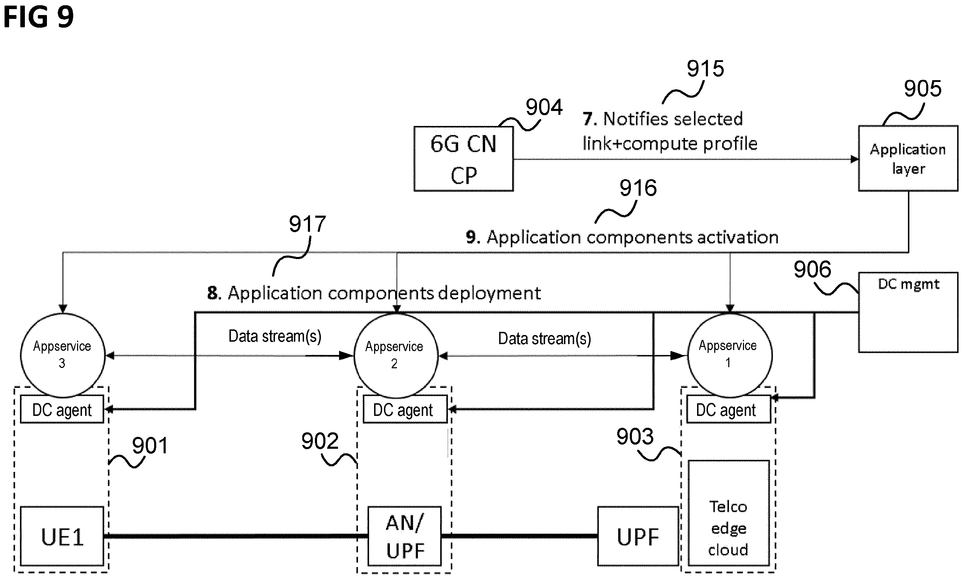

Continuing with figure 9, in 915, (after completion of link and compute resource control operations of figure 8) the control plane 904 informs the application layer 905 about the selected link and computer profile. In 916, the DC management component 906 deploys application components (e.g. containers and/or pods) on the local DC Agents. The application layer 905 activates the deployed application components in 917.

In the flow described above with reference to figures 6 to 9, the application layer component 605 requests a link and computing profile for the service from the control plane 604. However, as mentioned above, the application layer component 605 may also provide the control plane 604 with multiple alternative compute and link profiles for the control plane 604 to select one thereof.

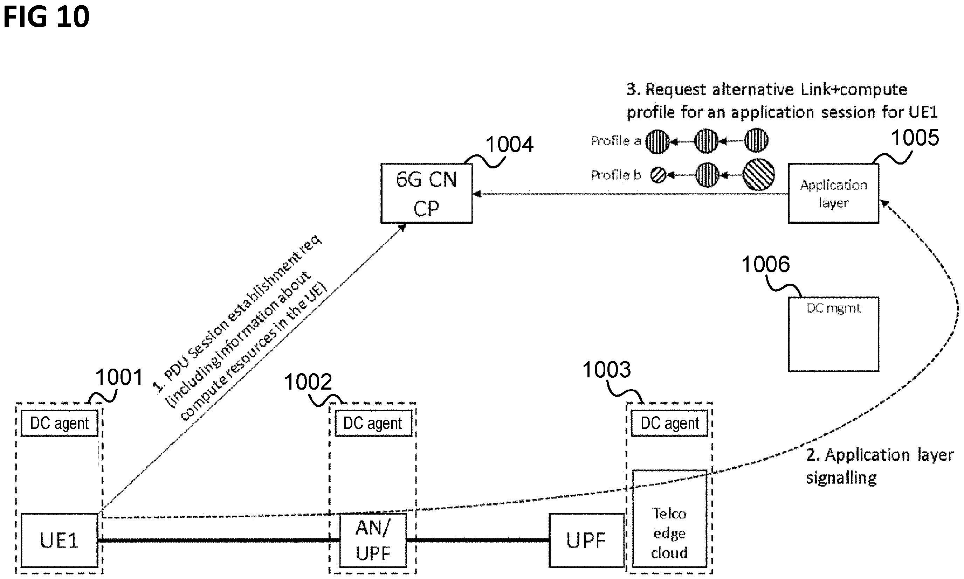

Figure 10 illustrates the provision of multiple link and computing profiles of the application layer 1005 to the control plane 1004. The profiles may correspond to different performance targets of the application session. The control plane 1004 then selects one of the alternative compute and link profiles (e.g. "profile b").

Otherwise, the flow (and involved components) is described as with reference to figure 6 (and the following flow of figures 7 to 9).

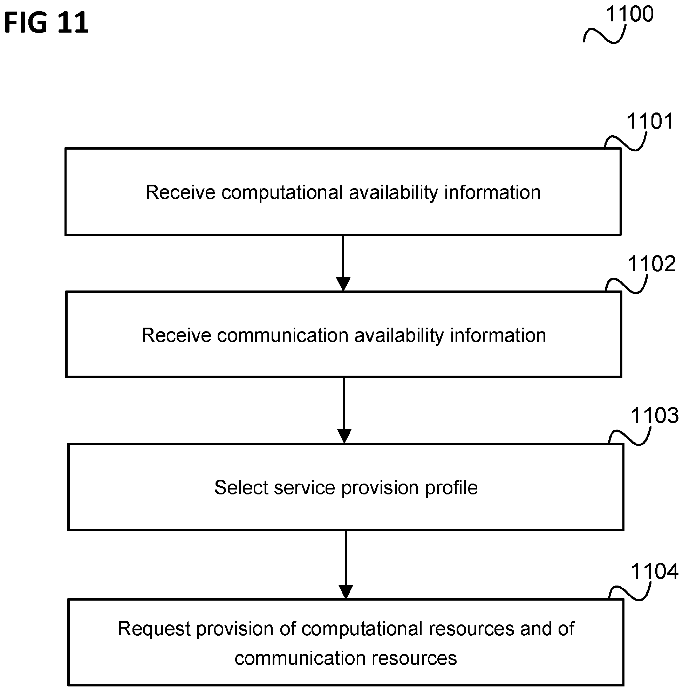

In summary, according to various embodiments, a method is provided as illustrated in figure 11.

Figure 11 shows a flow diagram 1100 illustrating a method for providing a communication and computing service session (i.e. a (communication and computing) session for providing the communication and computing service) according to an embodiment.

In 1101, one or more control plane functions of a mobile communication network connecting a mobile terminal with one or more other computing devices receive computational availability information including information about what computational resources are available for provision of the communication and computing service session in the mobile terminal, the one or more other computing devices and one or more devices of the mobile communication network at least partially from a distributed computing management component.

In 1102, the one or more control plane functions receive communication availability information including information about what communication resources are available for provision of the communication and computing service session in the mobile terminal and the one or more devices of the mobile communication network at least partially from one or more user plane components of the mobile communication network.

In 1103 the one or more control plane functions select a service provision profile which specifies a distribution of tasks of the communication and computing service between the mobile terminal, the one or more other computing devices and the one or more devices of the mobile communication network depending on the computational availability information and the communication availability information.

In 1104 the one or more control plane functions request
- the distributed computing management component to provide computational resources of the mobile terminal, the one or more other computing devices and the one or more devices of the mobile communication network in accordance with the selected service provision profile for the provision of the communication and computing service session and
- request the one or more user plane components of the mobile communication network to provide communication resources of the mobile terminal and the one or more devices of the mobile communication network in accordance with the selected service provision profile for the provision of the communication and computing service session.

According to various embodiments, in other words, tasks are distributed between a mobile terminal, in-network components (i.e. components of a mobile communication network serving the mobile terminal, i.e. providing mobile communication to the mobile terminal, i.e. providing the mobile terminal with Internet access) and one or more other computing devices (other than the mobile terminal and not belonging to the mobile communication network, wherein the one or more other computing devices and the mobile communication network (i.e. the components belonging to the mobile communication network are for example separated by a UPF (of the mobile communication network)). The one or more devices of the mobile communication network (i.e. telecommunication network) connecting the mobile terminal with the one or more other computing devices, i.e. the in-network components, are for example components which forward data from the one or more other computing devices to the mobile terminal and vice versa. So, the one or more other computing devices may for example be one or more server devices (running one or more data servers) hosting data, i.e. (data) host devices. The service is for example the provision of data provided by the one or more other computing devices wherein the service of providing the data may include processing which is distributed over the mobile terminal, the in-network components and the one or more other computing devices.

It should be noted that the computational availability information and the communication availability information is provided by different entities (distributed computing management component and one or more user plane components, respectively). The distributed computing (DC) management component may be controlled by a control plane component, e.g. the DC controller of the mobile communcation network.

The selection can be based on various criteria, such as
- End-to-end latency: For example, distributing the tasks all over the network could help with distributing the energy consumption, but it can increase end-to-end latency. Since different AI inference models are distributed to different nodes, sharing the results and sending it back to the end user would lead to more end-to-end latency, which can be calculated by summing up the total inference time at each node plus uplink and downlink transmission times):
   inference time@node_a + inference time @node_b+inference time@LTE+inference time@telcoEdge + t_UL+t_DL < t_max (acceptable end-to-end delay)
   Even if the tasks are distributed throughout the network, better performance can possibly be achieved if there is an available resource at the telecommunication network edge and in-network entities so that offloaded tasks are completed faster.
- Energy efficiency: if there is an energy efficiency criterion at a LTE and one of the provision profiles is requiring LTE to perform computationally intensive tasks, that profile can be discarded based on the additional information that CP has
   Profile a: computation@UE + in network computing + computing at the telecommunication network edge
   Profile b: no_computation@UE + in network computing + computing at the telecommunication network ---> can be chosen if LTE has limited resources/ batteries etc.

The approach of figure 11 enables QoE optimization together with energy consumption minimization. For example, the QoS flow based on QoS rules is enhanced and energy consumption to be added as an input making use of the analytics data. It allows flexible profiles which better fit for a broader range of use cases and are beneficial for the sustainability and economic viability of energy-consuming services (e.g. AI-based approach, XR applications, etc.). The approach of figure 11 allows a fair use of network resources considering both computation requirements and link requirements. Computational resources of in-network elements are considered.

According to various embodiments, in particular, one or more of the following are provided
- Selection of link and computing profiles based on combination of service performance and energy saving criteria
- Energy consumption profile is an indicator of the energy efficiency of the compute component in the LTE or the network
- Corresponding Logic for PDU session establishment
- Corresponding logic in SMF and RAN nodes and an enhancement to QoS Profiles, which result in additional parameters in PCC (policy and charging control) rules.

The method is for example carried out by a communication system (which may include the mobile terminal and the one or more other computing devices), in particular one or more control plane components of a communication system, as for example illustrated in figure 1.

The method of figure 11, e.g. the components of a corresponding communication system (including the mobile terminal and the one or more other computing devices) may for example be implemented by (or include, respectively) one or more circuits. A "circuit" may be understood as any kind of a logic implementing entity, which may be special purpose circuitry or a processor executing software stored in a memory, firmware, or any combination thereof. Thus a "circuit" may be a hard-wired logic circuit or a programmable logic circuit such as a programmable processor, e.g. a microprocessor. A "circuit" may also be a processor executing software, e.g. any kind of computer program. Any other kind of implementation of the respective functions described above may also be understood as a "circuit".

While specific aspects have been described, it should be understood by those skilled in the art that various changes in form and detail may be made therein without departing from the spirit and scope of the aspects of this disclosure as defined by the appended claims. The scope is thus indicated by the appended claims and all changes which come within the meaning and range of equivalency of the claims are therefore intended to be embraced.

## Claims

1. A method for providing a communication and computing service session, comprising:
Receiving, by one or more control plane functions of a mobile communication network connecting a mobile terminal with one or more other computing devices, computational availability information including information about what computational resources are available for provision of the communication and computing service session in the mobile terminal, the one or more other computing devices and one or more devices of the mobile communication network at least partially from a distributed computing management component; Receiving, by the one or more control plane functions, communication availability information including information about what communication resources are available for provision of the communication and computing service session in the mobile terminal and the one or more devices of the mobile communication network at least partially from one or more user plane components of the mobile communication network;
Selecting, by the one or more control plane functions, a service provision profile which specifies a distribution of tasks of the communication and computing service between the mobile terminal, the one or more other computing devices and the one or more devices of the mobile communication network depending on the computational availability information and the communication availability information;
Requesting, by the one or more control plane functions, the distributed computing management component to provide computational resources of the mobile terminal, the one or more other computing devices and the one or more devices of the mobile communication network in accordance with the selected service provision profile for the provision of the communication and computing service session; and
Requesting, by the one or more control plane functions, the one or more user plane components of the mobile communication network to provide communication resources of the mobile terminal and the one or more devices of the mobile communication network in accordance with the selected service provision profile for the provision of the communication and computing service session.

2. The method of claim 1, comprising selecting the service provision profile and requesting the provision of computational resources and the provision of communication resource per communication and computing service session.

3. The method of claim 1 or 2, comprising receiving, by the one or more control plane functions, a part of the computational availability information and/or of the communication availability information including information about what communication and/or computational resources are available for provision of the communication and computing service session in the mobile terminal with a communication and computing service session establishment request from the mobile terminal.

4. The method of claim 3, wherein the communication and computing service session is a Protocol Data Unit session.

5. The method of any one of claims 1 to 4, comprising receiving, by the one or more control plane functions, a part of the availability information including information about what communication and computational resources are available for provision of the communication and computing service session in a radio access network of the mobile radio communication network from the radio access network.

6. The method of any one of claims 1 to 5, wherein the one or more control plane functions are one or more core network control plane functions of the mobile communication network.

7. The method of any one of claims 1 to 6, wherein the mobile communication network is a 6G mobile communication network.

8. The method of any one of claims 1 to 7, wherein the distributed computing management component manages distributed computing agents configured to execute tasks of the communication and computing service and implemented in the mobile terminal, the one or more other computing devices and/or the one or more devices of the mobile communication network.

9. The method of any one of claims 1 to 8, comprising selecting the service provision profile according to a service provision target including at least one of end-to-end latency of the communication and computing service session and energy efficiency of the provision of the communication and computing service session.

10. The method of any one of claims 1 to 9, comprising receiving, by the one or more control plane functions, multiple alternative service provision profiles and selecting the service provision profile from the multiple alternative service provision profiles, wherein each of the multiple alternative service provision profiles specifies a respective distribution of tasks of the communication and computing service between the mobile terminal, the one or more other computing devices and the one or more devices of the mobile communication network.

11. The method of claim 10, comprising receiving the multiple alternative service provision profiles from an application layer component.

12. The method of any one of claims 1 to 11, comprising, receiving, by the one or more control plane functions of a mobile communication network connecting a mobile terminal with the one or more other computing devices, service requirement information about requirements of a communication and computing service session for the mobile terminal from an application service control function and selecting the service provision profile depending on the service requirement information.

13. The method of claim 12, comprising receiving the service requirement information from an application layer component.

14. The method of any one of claims 1 to 13, wherein the one or more user plane components of the mobile communication network comprise a user plane function connecting the mobile terminal with the one or more other computing devices.

15. A communication system configured to perform the method of any one of claims 1 to 14.

## Amended claims

### Amended claims in accordance with Rule 137(2) EPC.

1. A method for requesting communication and computational resources for a communication and computing service session, comprising:
Receiving, by one or more control plane functions of a mobile communication network connecting a mobile terminal with one or more other computing devices, computational availability information including information about what computational resources are available for provision of the communication and computing service session in the mobile terminal, the one or more other computing devices and one or more devices of the mobile communication network at least partially from a distributed computing management component;
Receiving, by the one or more control plane functions, communication availability information including information about what communication resources are available for provision of the communication and computing service session in the mobile terminal and the one or more devices of the mobile communication network at least partially from one or more user plane components of the mobile communication network;
Selecting, by the one or more control plane functions, a service provision profile which specifies a distribution of tasks of the communication and computing service between the mobile terminal, the one or more other computing devices and the one or more devices of the mobile communication network depending on the computational availability information and the communication availability information;
Requesting, by the one or more control plane functions, the distributed computing management component to provide computational resources of the mobile terminal, the one or more other computing devices and the one or more devices of the mobile communication network in accordance with the selected service provision profile for the provision of the communication and computing service session; and
Requesting, by the one or more control plane functions, the one or more user plane components of the mobile communication network to provide communication resources of the mobile terminal and the one or more devices of the mobile communication network in accordance with the selected service provision profile for the provision of the communication and computing service session.

2. The method of claim 1, comprising selecting the service provision profile and requesting the provision of computational resources and the provision of communication resource per communication and computing service session.

3. The method of claim 1 or 2, comprising receiving, by the one or more control plane functions, a part of the computational availability information and/or of the communication availability information including information about what communication and/or computational resources are available for provision of the communication and computing service session in the mobile terminal with a communication and computing service session establishment request from the mobile terminal.

4. The method of claim 3, wherein the communication and computing service session is a Protocol Data Unit session.

5. The method of any one of claims 1 to 4, comprising receiving, by the one or more control plane functions, a part of the availability information including information about what communication and computational resources are available for provision of the communication and computing service session in a radio access network of the mobile radio communication network from the radio access network.

6. The method of any one of claims 1 to 5, wherein the one or more control plane functions are one or more core network control plane functions of the mobile communication network.

7. The method of any one of claims 1 to 6, wherein the mobile communication network is a 6G mobile communication network.

8. The method of any one of claims 1 to 7, wherein the distributed computing management component manages distributed computing agents configured to execute tasks of the communication and computing service and implemented in the mobile terminal, the one or more other computing devices and/or the one or more devices of the mobile communication network.

9. The method of any one of claims 1 to 8, comprising selecting the service provision profile according to a service provision target including at least one of end-to-end latency of the communication and computing service session and energy efficiency of the provision of the communication and computing service session.

10. The method of any one of claims 1 to 9, comprising receiving, by the one or more control plane functions, multiple alternative service provision profiles and selecting the service provision profile from the multiple alternative service provision profiles, wherein each of the multiple alternative service provision profiles specifies a respective distribution of tasks of the communication and computing service between the mobile terminal, the one or more other computing devices and the one or more devices of the mobile communication network.

11. The method of claim 10, comprising receiving the multiple alternative service provision profiles from an application layer component.

12. The method of any one of claims 1 to 11, comprising, receiving, by the one or more control plane functions of a mobile communication network connecting a mobile terminal with the one or more other computing devices, service requirement information about requirements of a communication and computing service session for the mobile terminal from an application service control function and selecting the service provision profile depending on the service requirement information.

13. The method of claim 12, comprising receiving the service requirement information from an application layer component.

14. The method of any one of claims 1 to 13, wherein the one or more user plane components of the mobile communication network comprise a user plane function connecting the mobile terminal with the one or more other computing devices.

15. A communication system configured to perform the method of any one of claims 1 to 14.
